# FASCICULE DE BREVET EUROPEEN

(11) **EP 0 531 225 B1**
(45) Date de publication et mention de la délivrance du brevet: **24.01.1996**
(21) Numéro de dépôt: 92402430.0
(22) Date de dépôt: 04.09.1992
(51) Int. Cl.: G02B 6/25

(54) **Procédé de clivage de fibre optique**
Verfahren zum Schneiden einer optischen Faser
Method of cleaving an optical fibre

(30) Priorité: 06.09.1991 FR 9111061
(43) Date de publication de la demande: 10.03.1993
(73) Titulaire: RADIALL, F-93116 Rosny-Sous-Bois (FR)
(72) Inventeur: Yin, Huan Ben, F-91540 Mennecy (FR); Ferina, Robert, F-94300 Vincennes (FR)
(74) Mandataire: Leszczynski, André

(56) Documents cités:
- EP-A- 0 442 202
- FR-A- 2 646 521
- US-A- 4 621 895
- PATENT ABSTRACTS OF JAPAN vol. 8, no. 210 (M-328) 26 Septembre 1984 ; & JP-A-59 097 832

## Description

La présente invention concerne un procédé de clivage de fibre optique et notamment un procédé permettant d'obtenir par clivage une face d'extrémité de fibre optique oblique.

Afin de diminuer la réflexion au niveau d'une connexion de fibres optiques, on utilise des fibres optiques du type dans lequel la face d'extrémité de la fibre est oblique, c'est-à-dire non perpendiculaire à l'axe de la fibre.

Il est important dans la pratique de minimiser la réflexion du signal transmis sur la face d'extrémité d'une fibre optique en particulier lors de l'utilisation de lasers DFB à haut débit.

On connait différents procédés pour réaliser une face oblique à l'extrémité d'une fibre optique.

Ainsi, un premier procédé consiste à immobiliser la fibre par collage dans un support et à la polir, ce procédé étant surtout utilisé quand l'extrémité de la fibre est montée dans une ferrule.

Un second procédé, plus économique, permet d'obtenir directement une face oblique par fracture ou clivage de la fibre optique. Selon ce procédé, on exerce sur un tronçon de la fibre maintenu dans des supports espacés, une traction et une torsion et on réalise une amorce de rupture en un point du tronçon au moyen d'un outil tel qu'une lame, de manière à déterminer précisément l'endroit de la fracture (cf. par exemple EP-A-0 442 202).

Si ce dernier procédé est assez facile à mettre en oeuvre pour une seule fibre il est par contre très difficile, voire impossible, à utiliser pour un câble plat comportant plusieurs fibres rapprochées du fait de la nécessité d'appliquer, individuellement à chaque fibre du câble, une torsion à son extrémité.

La présente invention vise à fournir un procédé de clivage d'une fibre optique, simple et économique, permettant d'obtenir une face d'extrémité oblique, c'est-à-dire présentant un angle non nul avec le plan normal à l'axe de la fibre, et dont la forme est en outre adaptée à diminuer la réflexion du signal transmis.

Le procédé selon l'invention consiste à maintenir un tronçon de fibre optique entre deux supports espacés, à déplacer l'un desdits supports par rapport à l'autre, et à provoquer le clivage de la fibre dans une zone de rupture imposée par une amorce de rupture réalisée au moyen d'un outil, tel qu'une lame, caractérisé par le fait que l'on maintient la fibre encastrée dans lesdits supports sans exercer sur elle de contraintes, notamment de traction et de torsion, et que l'on déplace un premier support uniquement en translation selon un axe perpendiculaire à l'axe de la fibre tout en maintenant fixe le second support et que l'on réalise l'amorce de rupture soit avant, soit pendant, soit après ledit déplacement du support mobile.

De préférence, les deux supports sont distants d'une longueur comprise entre dix et vingt fois le diamètre de la fibre, de préférence quatorze fois, l'écartement entre les supports étant maintenu constant pendant toute la phase de déplacement du support mobile.

L'encastrement de la fibre dans les supports est réalisé de manière que la fibre soit simplement maintenue droite entre les supports, sans génération de contraintes.

Le déplacement du support mobile a lieu avantageusement sur une longueur comprise entre 0,7 et 2 fois le diamètre de la fibre, de préférence 1 fois.

Ce déplacement exerce sur la fibre une contrainte de flexion, une contrainte de traction et une contrainte de cisaillement.

Un avantage remarquable du procédé de l'invention réside dans la forme de ces contraintes sur une section quelconque de la fibre comprise entre les deux supports.

D'une part la contrainte de cisaillement obtenue conformément à l'invention varie paraboliquement selon l'axe de déplacement du support mobile et trouve son maximum dans le diamètre de la fibre perpendiculaire à cet axe.

D'autre part, la résultante des contraintes de traction et de flexion est parallèle au plan déterminé par l'axe de la fibre et l'axe de déplacement du support mobile et se trouve inclinée du côté de ce déplacement.

Par conséquent, il s'exerce sur une section quelconque de la fibre optique comprise entre les deux supports des contraintes propres à générer une fracture oblique. En outre, par mise en oeuvre du procédé selon l'invention l'angle de fracture, c'est-à-dire l'angle compris entre la normale à la face de la fibre fracturée et l'axe de la fibre, est maximal au centre de ladite face de rupture, au voisinage de l'axe de la fibre.

De plus, la contrainte de flexion qui est maximale aux encastrements dans les supports et nulle au milieu des deux supports varie le long de la fibre, modifiant ainsi notamment l'orientation de la contrainte résultante au centre de la fibre.

Il suffit donc de déterminer la position de la zone de fracture entre les deux supports pour déterminer l'angle de fracture de la fibre.

Dans un premier mode de mise en oeuvre de l'invention on réalise sur la fibre l'amorce de rupture déterminant la zone de fracture avant déplacement du support mobile. Ce procédé est avantageux quand une très grande précision dans la détermination de la position de fracture est requise.

Dans un second mode de mise en oeuvre, on déplace d'abord ledit support mobile, puis on déplace l'outil jusqu'au contact de la fibre pour réaliser l'amorce de rupture, provoquant la fracture.

Selon un troisième mode de mise en oeuvre, on utilise un outil fixe et on déplace le support mobile pour amener la fibre au contact de l'outil et réaliser l'amorce de rupture, provoquant la fracture.

Afin de mieux faire comprendre l'invention, on va en décrire maintenant des modes de réalisation non limitatifs en référence au dessin annexé dans lequel :
- les figures 1a à 1c représentent schématiquement en coupe les étapes d'un premier mode de mise en oeuvre d'un procédé selon l'invention,
- les figures 2a à 2c représentent schématiquement en coupe les étapes d'un deuxième mode de mise en oeuvre du procédé selon l'invention,
- les figures 3a et 3b représentent schématiquement en coupe les étapes d'un troisième mode de mise en oeuvre du procédé selon l'invention,
- la figure 4 est une vue schématique d'une zone de connexion de fibres optiques illustrant la perte par réflexion subie par un signal transmis,
- la figure 5 représente une vue en coupe d'une extrémité oblique d'une fibre optique obtenue par clivage selon la technique antérieure,
- la figure 6 représente une vue schématique de la distribution de la contrainte de cisaillement sur une section de la fibre lors de la mise en oeuvre du procédé selon l'invention,
- la figure 7 est une représentation graphique de l'amplitude de la contrainte de la figure 6,
- la figure 8 représente une vue schématique de la distribution de la résultante des contraintes de traction et de flexion sur une section de la fibre lors de la mise en oeuvre du procédé selon l'invention,
- la figure 9 représente une vue en coupe d'une extrémité oblique d'une fibre optique obtenue par le procédé de la présente invention,
- la figure 10 représente une vue en coupe d'un dispositif de clivage permettant de mettre en oeuvre le procédé selon l'invention simultanément sur plusieurs fibres optiques, et
- la figure 11 représente une vue en perspective du dispositif de la figure 10.

Pour plus de clarté, les proportions n'ont pas été respectées sur les figures.

Dans les trois modes de mise en oeuvre illustrés, on a désigné par 1 un support fixe, par 2 un support mobile, par 3 une lame telle qu'un diamant, et par 4 une fibre optique.

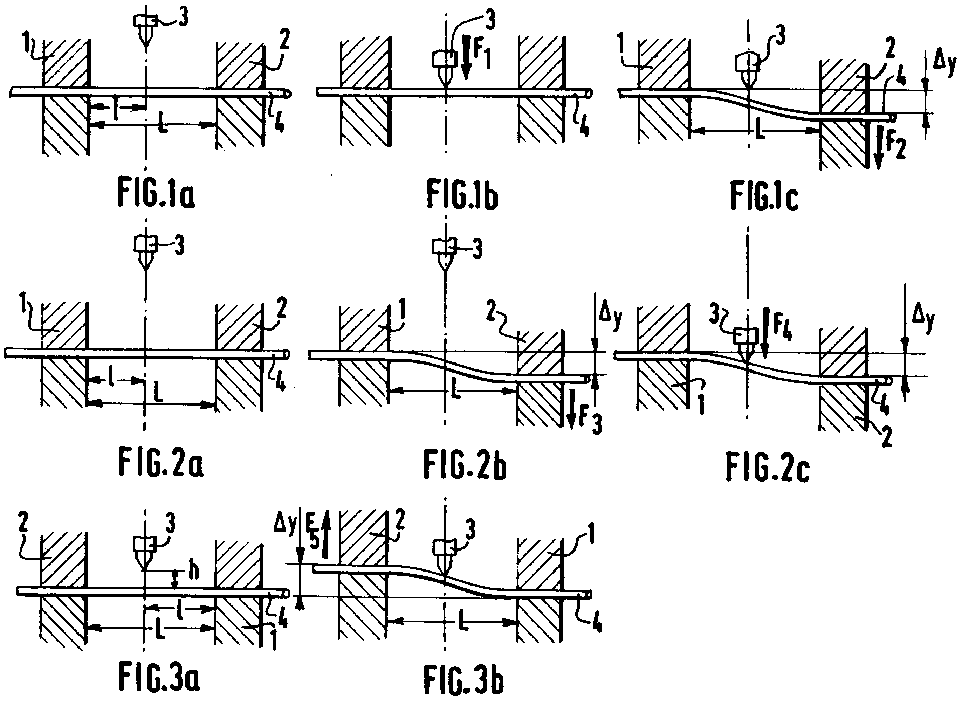

Les figures 1a, 2a, et 3a, illustrent la fibre 4 encastrée dans les deux supports 1 et 2, la lame 3 étant disposée au-dessus de la fibre 4. Les supports 1 et 2 dans cet ensemble sont distants d'une longueur L égale à 1,43 mm et la lame 3 se trouve à une distance 1 égale à 0,64 mm du support 1.

Sur la figure 1b, la lame 3 a été amenée au contact de la fibre 4 par un déplacement vers le bas matérialisé par la flèche F1, pour réaliser l'amorce de rupture sur la fibre 4 à une distance ℓ précise du support fixe 1.

Sur la figure 1c, le support mobile 2 a été translaté d'une longueur Δ y vers le bas comme indiqué par la flèche F2. Le support 1 est resté immobile et la distance L séparant les deux supports de fixation est restée constante. La figure 1c montre la fibre 4 juste avant rupture.

Dans le mode de réalisation de l'invention représenté sur les figures 2a à 2c, le support mobile 2 est d'abord déplacé d'une longueur Δ y dans la direction de la flèche F3. La distance L séparant les deux supports de fixation est maintenue constante.

La lame 3 est déplacée vers le bas jusqu'au contact de la fibre 4, comme matérialisé par le flèche F4, pour réaliser l'amorce de rupture sur la fibre et la rupture de la fibre. La figure 2c montre la fibre 4 juste avant rupture.

Dans le mode de réalisation des figures 3a et 3b la lame 3 est maintenue immobile à une distance h de la fibre tandis que le support mobile 2 est déplacé en translation selon la flèche F5. Outre la génération de contraintes sur la fibre 4, sa mise en contact avec la lame 3 intervient quand le support mobile (2) a parcouru une distance Δ y. Cette mise en contact de la fibre avec la lame provoque l'amorce de rupture et la rupture de la fibre. La figure 3b représente la fibre 4 juste avant rupture.

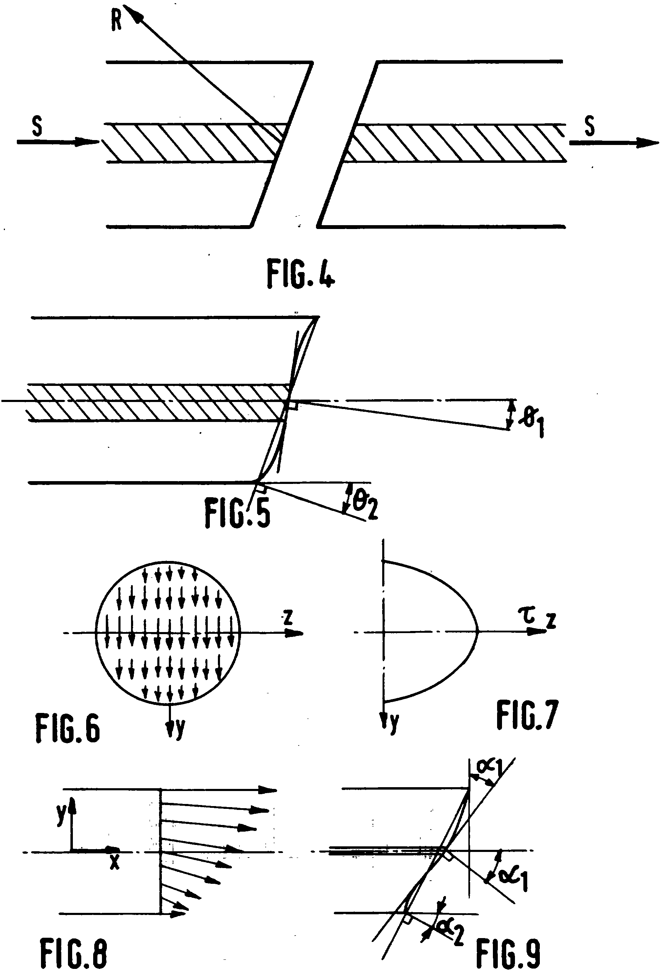

A titre d'exemple, avec une fibre optique ayant un diamètre de gaine optique de 125 µm, avec un déplacement Δ y de 0,116 mm, et les valeurs 1 et L indiquées précédemment, l'angle de rupture α₁ (illustré à la figure 9) obtenu au centre de la face de la fibre entre la normale à cette face et l'axe de la fibre est voisin de 12°.

La dispersion des valeurs de l'angle α obtenues en réalisant plusieurs fractures selon le procédé de l'invention est faible ce qui montre que l'on peut réaliser grâce à l'invention des faces d'extrémité de fibre optique avec une inclinaison bien déterminée permettant la réalisation de connexions de fibres optiques à faces d'extrémité obliques de bonne qualité.

La figure 4 représente schématiquement une connexion de fibres optiques traversée par un signal S. On voit sur cette figure qu'à l'interface des fibres le signal S se réfléchit partiellement sur une face d'extrémité pour donner un signal réfléchi R.

En particulier, le coeur de la fibre étant le vecteur principal du signal optique, il est important que la partie centrale de la face d'extrémité de la fibre présente une obliquité suffisante.

La figure 5 représente une vue en coupe d'une extrémité oblique d'une fibre optique obtenue par clivage selon la technique antérieure. Notamment, on remarque que l'angle θ₁ au centre de la face de la fibre entre la normale à cette face et l'axe de la fibre est inférieur à l'angle global d'inclinaison de la face de la fibre θ₂.

Sur la figure 6 on observe la distribution de la contrainte de cisaillement, schématisée par des flèches verticales, sur une section quelconque de la fibre selon l'invention. Sur cette figure, Y désigne l'axe de déplacement du support mobile et Z l'axe médian de la fibre perpendiculaire à Y.

Sur la figure 7 est représentée la forme τ de l'amplitude de la contrainte de la figure 6 dont on voit qu'elle varie paraboliquement selon l'axe Y avec un maximum sur l'axe Z.

La figure 8 représente la distribution de la résultante des contraintes de traction et de flexion sur la section de la fibre à fracturer et préparée conformément à l'invention. On y retrouve l'axe Y de déplacement du support mobile, et l'axe X de la fibre, ladite résultante se trouvant dans le plan contenant les axes X et Y et étant inclinée du côté dudit déplacement. C'est cette contrainte résultante qui génère la fracture oblique, avec, grâce à la mise en oeuvre de l'invention, un angle de fracture maximum dans la région située au voisinage de l'axe de la fibre.

On voit sur la figure 9 cet angle α₁ entre la normale au centre de la face de la fibre et l'axe de celle-ci et on constate que c'est bien l'angle maximal d'obliquité de la face d'extrémité de la fibre sur toute sa section, cet angle α₁ étant, contrairement à la technique antérieure illustrée à la figure 5, supérieur à l'angle global d'inclinaison de la face de la fibre α₂.

Le procédé de clivage selon l'invention est facilement applicable à une fracture simultanée de plusieurs fibres optiques parallèles très rapprochées dans un même câble plat.

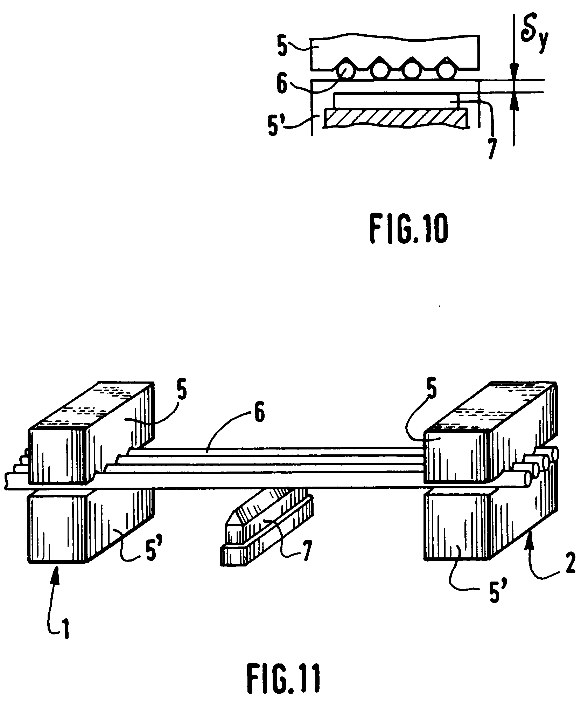

Une illustration d'un dispositif utilisable à cet effet est donnée aux figures 10 et 11.

Sur ces figures, la référence 6 désigne une des quatre fibres encastrée dans des supports 1 et 2 constitués chacun d'un bloc 5 muni de gorges de section par exemple triangulaire et d'un bloc 5' par exemple à face droite et 7 désigne une lame unique qui réalise l'amorce sur les quatre fibres simultanément, avant, pendant ou après le déplacement du support mobile, comme expliqué précédemment.

## Revendications

1. Procédé de clivage de fibre optique permettant d'obtenir une face d'extrémité de fibre optique oblique, consistant à maintenir un tronçon de fibre optique entre deux supports espacés, à déplacer l'un desdits supports par rapport à l'autre, et à provoquer le clivage de la fibre dans une zone de rupture imposée par une amorce de rupture réalisée au moyen d'un outil, tel qu'une lame, caractérisé par le fait que l'on maintient la fibre (4) encastrée dans lesdits supports (1,2;5,5') sans exercer sur elle de contrainte, notamment de traction ou de torsion, que l'on déplace l'un des supports (1) uniquement en translation selon un axe (Y) perpendiculaire à l'axe (X) de la fibre (4) tout en maintenant fixe l'autre support (2), et que l'on réalise l'amorce de rupture soit avant, soit pendant, soit après ledit déplacement du support mobile.

2. Procédé selon la revendication 1, caractérisé par le fait que les deux supports de fixation (1,2) sont distants d'une longueur (L) comprise entre 10 et 20 fois le diamètre de la fibre (4), de préférence 14 fois.

3. Procédé selon l'une quelconque des revendications précédentes, caractérisé par le fait que ledit déplacement du support mobile (1) a lieu sur une distance (ΔY) comprise entre 0,7 et 2 fois le diamètre de la fibre (4), de préférence 1 fois.

4. Procédé de clivage simultané de plusieurs fibres optiques, permettant d'obtenir une face d'extrémité oblique sur chacune des fibres optiques (6), caractérisé par le fait que l'on maintient des tronçons de plusieurs fibres parallèles entre eux par encastrement dans deux supports (1,2;5,5') espacés, sans exercer sur lesdites fibres (6) de contrainte, notamment de traction ou de torsion, que l'on déplace l'un des supports uniquement en translation selon un axe perpendiculaire au plan contenant les axes des fibres tout en maintenant fixe l'autre support, et que l'on réalise une amorce de rupture avant, pendant ou après ledit déplacement au moyen d'un outil tel qu'une lame (7) simultanément sur chaque tronçon de chacune desdites fibres.

## Patentansprüche

1. Verfahren zum Trennen einer optischen Faser, das es gestattet, eine abgeschrägte Endfläche der optischen Faser zu erhalten, bestehend aus Halten eines Abschnitts der optischen Faser zwischen zwei beabstandeten Haltern, Bewegen eines der Halter in bezug auf den anderen und Bewirken der Trennung der Faser in einer Trennzone, die durch eine mit Hilfe eines Werkzeugs wie etwa einer Klinge hergestellte Bruchauslösestelle bestimmt wird, dadurch gekennzeichnet, daß man die Faser (4) in den Haltern (1, 2; 5, 5') eingeschlossen hält, ohne auf sie eine Spannung, insbesondere Zug- oder Torsionsspannung auszuüben, daß man den einen der Halter (1) einzig in einer Translation längs einer zur Achse (X) der Faser (4) senkrechten Achse (Y) bewegt und dabei den anderen Halter (2) festhält, und daß man die Bruchauslösestelle vor, während oder nach dem Bewegen des beweglichen Halters herstellt.

2. Verfahren nach Anspruch 1, dadurch gekennzeichnet, daß die beiden Befestigungs-Halter (1, 2) voneinander um einen Abstand (L) entfernt sind, der zwischen dem Zehn- und Zwanzigfachen, vorzugsweise das Vierzehnfache des Durchmessers der Faser (4) beträgt.

3. Verfahren nach einem der vorstehenden Ansprüche, dadurch gekennzeichnet, daß die Bewegung des beweglichen Halters (1) über eine Strecke (ΔY) erfolgt, die zwischen dem 0,7- und dem 2-fachen, vorzugsweise das 1-fache des Durchmessers der Faser (4) beträgt.

4. Verfahren zum gleichzeitigen Trennen mehrerer optischer Fasern, das es gestattet, eine abgeschrägte Endfläche an Jeder der optischen Fasern (6) zu erhalten, dadurch gekennzeichnet, daß man Abschnitte mehrerer Fasern durch Einschluß in zwei beabstandete Halter (1, 2; 5, 5') zueinander parallel hält, ohne auf die Fasern (6) eine Spannung, insbesondere Zug- oder Torsionsspannung auszuüben, daß man einen der Halter einzig in einer Translation längs einer zu der die Achsen der Fasern enthaltenden Ebene senkrechten Achse bewegt und dabei den anderen Halter festhält, und daß man mit Hilfe eines Werkzeugs wie etwa einer Klinge (7) vor, während oder nach der genannten Bewegung eine Bruchauslösestelle in Jedem Abschnitt Jeder der Fasern herstellt.

## Claims

1. Process for splitting optical fibres to give an oblique end of optical fibre, consisting of holding a piece of optical fibre between two spaced supports, moving one of the said supports in relation to the other, and provoking the splitting of the fibre in a rupture zone imposed by the start of a rupture produced by means of a tool such as a blade, characterized in that the fibre (4) is held fixed in the said supports (1, 2; 5, 5') without any stress in particular traction or torsion being exerted on the said fibre, that one of the said supports (1) is moved only in translation about an axis (Y) perpendicular to the axis (X) of the fibre (4) while maintaining the other support (2) fixed, and that the start of the rupture is produced either before or during or after the said displacement of the mobile support.

2. Process according to claim 1, characterized in that the two fixing supports (1, 2) are separated by a length (L) of between 10 and 20 times the diameter of the fibre (4), preferably 14 times.

3. Process according to any of the preceding claims, characterized in that the said displacement of the mobile support (1) takes place over a distance (ΔY) of between 0.7 and 2 times the diameter of the fibre (4), preferably 1 time.

4. Process for splitting several optical fibres simultaneously to give an oblique end on each optical fibre (6), characterized in that pieces of several fibres are held parallel to each other by being fixed in two supports (1, 2; 5, 5'), without any stress in particular traction or torsion being exerted on the said fibres (6), that one of the said supports is moved only in translation about an axis perpendicular to the plane containing the axes of the fibres while maintaining the other support fixed, and that the start of the rupture is produced either before or during or after the said displacement simultaneously on each section of each of the said fibres by means of a tool such as a blade (7).
